Europäisches Patentamt

European Patent Office

Office européen des brevets

(19)

(11) Veröffentlichungsnummer: **0 167 645**

**A1**

(12)

# EUROPÄISCHE PATENTANMELDUNG

(21) Anmeldenummer: **84108043.5**

(22) Anmeldetag: **10.07.84**

(51) Int. Cl.⁴: **B 31 B 17/00**

(43) Veröffentlichungstag der Anmeldung:
**15.01.86 Patentblatt 86/3**

(84) Benannte Vertragsstaaten:
**AT BE CH DE FR GB IT LI LU NL SE**

(71) Anmelder: **Görig, Rudolf**
**Kanalstrasse 12**
**D-7064 Remshalden 1(DE)**

(72) Erfinder: **Görig, Rudolf**
**Kanalstrasse 12**
**D-7064 Remshalden 1(DE)**

(74) Vertreter: **Rüger, Rudolf, Dr.-Ing. et al,**
**Webergasse 3 Postfach 348**
**D-7300 Esslingen/Neckar(DE)**

(54) Verfahren und Vorrichtung zum Herstellen von dichten trommel- oder dosenförmigen Behältern, insbesondere aus zumindest einseitig mit thermoplastischem Kunststoff beschichtetem Karton- oder Pappematerial.

(57) Um eine einwandfreie flussigkeitsdichte Verbindung zwischen dem eingesetzten Boden (3) auf rationelle zeitsparende Weise zu erzielen und damit dichte Behälter hoher Qualität herzustellen, wird derart vorgegangen, daß nach dem Einsetzen des Bodens (3) der Überstand (5) der Hülse (2) flachliegend U-förmig umgeschlagen und großflächig gegen die Innenseite der Randleiste (4) des Bodens (3) angepreßt wird, worauf die Randleiste (4) zusätzlich mit dem an ihr innen anliegenden Teil des Hulsenüberstandes (5) abdichtend verschweißt wird.

EP 0 167 645 A1

./...

*Fig. 1*

- 1 -

Verfahren und Vorrichtung zum Herstellen von dichten trommel- oder dosenförmigen Behältern, insbesondere aus zumindest einseitig mit thermoplastischem Kunststoff beschichtetem Karton- oder Pappematerial

Die Erfindung betrifft ein Verfahren zum Herstellen von dichten trommel- oder dosenförmigen Behältern, insbesondere aus zumindest einseitig mit thermoplastischem Kunststoff oder Lack beschichtetem Karton- oder Pappematerial, bei dem in eine vorgefertigte Behälterhülse ein unter Ausbildung einer umlaufenden Randleiste randseitig abgewinkelter Boden mit der Randleiste nach unten weisend eingesetzt und mit der Hülse über die dazwischenliegende Kunststoffschicht verschweißt wird, wobei ein Überstand der Hülse nach innen umgebogen wird.

Außerdem betrifft die Erfindung eine Vorrichtung zur Durchführung dieses Verfahrens mit einer eine vorgefertigte Behälterhülse halternden Hülsenaufnahme und einem den unter Ausbildung einer umlaufenden Randleiste randseitig abgewinkelten Boden in die Hülse einschiebenden Bodeneinsetzvorrichtung, einer einen Hülsenüberstand gegen die nach außen weisende Randleiste des Bodens zu umbördelnden Bördelvorrichtung und einer Ultraschall-Schweißvorrichtung zur dichten Verschweißung der Hülseninnenwand mit der Randleiste des eingesetzten Bodens mittels der dazwischenliegenden Schicht aus thermoplastischem Kunststoff.

Bei einem aus der DE-OS 27 05 596 bekannten Verfahren zum Herstellen von einseitig offenen trommelartigen Behältern runder oder eckiger Querschnittsgestalt aus Voll- oder Wellpappe werden zunächst aus entsprechenden Pappezuschnitten Behälterhülsen hergestellt, die längs einer Mantelnaht verleimt werden. Anschließend werden in die so vorgefertigten Hülsen im wesentlichen topfförmige, ebenfalls vorgefertigte Bodenteile mit ihrer abgewinkelten umlaufenden Randleiste nach unten weisend eingeschoben und in der Hülse fixiert. Schließlich wird ein randseitiger Hülsenüberstand nach innen zu derart eingerollt oder eingebördelt, daß sich eine im Querschnitt im wesentlichen kreisförmige Bördelung ergibt und der eingebördelte Hülsenüberstand mit seiner freien Stirnkante sich gegen die Innenseite der Randleiste des Bodenteils abstützt. Der eingerollte oder eingebördelte Hülsenüberstand soll insbesondere einen mechanischen Schutz der Behälterberandung im Bereiche der Aufstellfläche geben.

Das Einsetzen der Bodenteile in die Hülsen geschieht bei diesem bekannten Verfahren mittels eines schrittgeschalteten Dornrades, auf dessen Dorne die Hülsen aufgesteckt werden, und dem eine Bodeneinsetzvorrichtung und eine Bördelvorrichtung für den Hülsenüberstand sowie eine Abzieh-oder Auswurfvorrichtung für den fertigen Behälter zugeordnet sind.

Um eine dichte Verbindung des Bodens mit der vorgefertigten Hülse zu erzielen, ist es bekannt, die abgewinkelte Randleiste des Bodenteiles mit der Hülseninnenwand rings umlaufend zu verleimen. Eine solche Verleimung ist aber verhältnismäßig umständlich und vor allem auch zeitaufwendig. Davon abgesehen ist bei stärkeren Pappequalitäten die zum Erweichen des thermoplastischen Klebstoffauftrages erforderliche Dauerbeheizung der Hülse und der Randleiste des Bodenteiles nicht mehr ohne weiteres möglich.

Für dichte Behälter der erwähnten Art werden auch mit thermoplastischem Kunststoff beschichtete Pappe- oder Kartonmaterialien verwendet, deren Kunststoffbeschichtung eine Ultraschall-Verschweißung im Bereiche der Mantelnaht der Hülse und für das eingesetzte Bodenteil erlaubt. Dazu wird derart vorgegangen, daß das eingesetzte topfförmige Bodenteil mit der Außenseite seiner abgewinkelten Randleiste mit der beschichteten Innenwand in einem Schritt verschweißt wird.

Dabei tritt die Schwierigkeit auf, daß, herrührend von der bei der Vorformung des topfförmigen Bodenteils nicht ganz zu vermeidenden Faltenbildung im Bereiche der Randleiste oder von Ungenauigkeiten im Bereiche der Innenwand der Behälterhülse nur schwer eine absolut flüssigkeitsdichte Verschweißung zwischen dem Bodenteil und der Hülse erzielbar ist. In der Praxis muß beim Verschweißen mit einer örtlichen Kanalbildung im Bereiche der rings umlaufenden Schweißnaht gerechnet werden, was zu Undichtheiten und damit zu Ausschuß führt.

Aufgabe der Erfindung ist es deshalb, einen Weg zu weisen, der es gestattet, bei trommel- oder dosenförmigen Behältern, insbesondere aus einseitig mit thermoplastischem Kunststoff beschichtetem Karton- oder Pappematerial eine einwandfreie flüssigkeitsdichte Verbindung zwischen dem eingesetzten Boden auf rationelle zeitsparende Weise zu erzielen und damit dichte Behälter hoher Qualität herzustellen.

Zur Lösung dieser Aufgabe wird bei dem eingangs genannten Verfahren erfindungsgemäß derart vorgegangen, daß nach dem Einsetzen des Bodens der Überstand der Hülse flachliegend U-förmig umgeschlagen und großflächig gegen die Innenseite der Randleiste des Bodens angepreßt wird und daß sodann die Randleiste zusätzlich mit dem an ihr innen anliegenden Teil des Hülsenüberstandes abdichtend verschweißt wird.

Da die Randleiste des Bodens sowohl auf ihrer Außenumfangsseite als auch auf ihrer Innenumfangsseite mit der Hülseninnenwand bzw. dem U-förmig umgeschlagenen Hülsenüberstand dichtend verschweißt ist, wird eine hervorragende Abdichtung der Schweißverbindung zwischen der Hülse und dem Boden gewährleistet. Gleichzeitig bietet der U-förmig umgeschlagene Hülsenüberstand einen randseitigen Schutz im Bereiche der Aufstellfläche des Behälters.

Die beidseitige Verschweißung der Randleiste des Bodens mit dem Material der Behälterhülse in der erwähnten Weise kann an sich mit jedem Kunststoff-Schweißverfahren erfolgen, das es gestattet, an den rings umlaufenden Schweißstellen beidseitig der Randleiste des Bodens den thermoplastischen Kunststoff auf die für die Verschweißung erforderliche Temperatur kurzzeitig zu erwärmen. Besonders vorteilhaft läßt sich aber das Verfahren mit Ultraschall-Verschweißung durchführen. Dabei wird in einer bevorzugten Ausführungsform derart vorgegangen, daß die doppelseitige Verschweißung der Randleiste durch zwei in zeitlichem Abstand erfolgende Ultraschallimpulse erfolgt, deren zeitlicher Abstand so groß ist, daß der thermoplastische Kunststoff an der von dem ersten Impuls herrührenden Schweißstelle erhärtet ist, bevor der zweite Schweißimpuls auftritt.

Bei der Ultraschall-Verschweißung wird der thermoplastische Kunststoff an der Schweißstelle dadurch auf die Schweißtemperatur erwärmt, daß die beiden miteinander zu verschweißenden Flächen mit der Ultraschallfrequenz (20 bis 100 kHz) aneinander "gerieben" werden. Dazu wird das die eine Schweißfläche tragende Teil in einer geeigneten Halterung unbeweglich festgehalten, während das die andere Schweißfläche aufweisende Teil die zur Plastifizierung des Kunststoffs erforderliche relative Schwingungsbewegung ausführen kann. Die Zuführung der Ultraschallenergie erfolgt durch eine sogenannte Sonotrode, die mit einem Ultraschallgenerator verbunden ist und ihre Ultraschallschwingungen auf das schwingungsfähig gelagerte Teil überträgt.

Bei dem neuen Verfahren wird während des Auftretens des ersten Schweißimpulses die Randleiste des Bodens entweder mit der außenanliegenden Hülseninnenwand oder mit dem U-förmig umgeschlagenen innenliegenden Hülsenüberstand verschweißt. An dieser Schweißnaht sind die beiden einander zugeordneten Teile sodann starr miteinander verbunden. Dies bedeutet, daß beim Auftreten des zweiten Schweißimpulses dieser lediglich im Bereiche der die zweite Schweißstelle bildenden, noch miteinander unverbundenen Flächen zur Wirkung kommen und dort die zweite Schweißverbindung herstellen kann. Auf diese Weise wird mit den beiden zeitlich aufeinanderfolgenden Schweißimpulsen selbsttätig eine doppelseitige Verschweißung der Randleiste des Bodens gewährleistet, ohne daß dazu besondere Vorkehrungen getroffen werden müßten.

Als besonders zweckmäßig hat es sich erwiesen, wenn eine die Schweißimpulse erzeugende, dem Bodenumriß angepaßte Sonotrode innerhalb des umgeschlagenen Hülsenüberstandes angeordnet und die Hülse von außen her gegen die Sonotrode angepreßt wird. Dabei kann nämlich mit verhältnismäßig einfachen Mitteln eine genaue satte Anpressung der miteinander zu verschweißenden Flächen erzielt werden, ohne daß zu aufweitbaren Dornen od.dgl. Zuflucht genommen werden müßte.

Eine zur Durchführung des erwähnten Verfahrens dienende Vorrichtung ist erfindungsgemäß dadurch gekennzeichnet, daß die Bördelvorrichtung eine den Hülsenüberstand flachliegend U-förmig umfaltende Einrichtung aufweist, durch die der umge-

0167645

schlagene Teil des Hülsenüberstandes großflächig gegen die Innenseite der Randleiste des eingesetzten Bodens anpreßbar ist und daß die Schweißvorrichtung zur doppelseitigen Verschweißung der Randleiste mit der Hülseninnenwand und dem umgeschlagenen Teil des Hülsenüberstandes eingerichtet ist.

Um bei Verwendung schwer zu verarbeitender Pappequalitäten oder bei dickem Pappematerial zu vermeiden, daß die Pappe im Bereiche der U-förmigen Umfaltung des Hülsenüberstandes aufreißt oder beschädigt wird, kann die Anordnung derart getroffen sein, daß die Bördelvorrichtung eine den Hülsenüberstand in einem ersten Schritt in eine etwa rechtwinklig zu der Hülsenlängsachse verlaufende Richtung abwinkelnde Vorbördelvorrichtung und eine anschließend daran zur Wirkung kommende Umbördelvorrichtung enthält, durch die der abgewinkelte Teil des Hülsenüberstandes in einem zweiten Schritt in seinen Endzustand fertig faltbar ist und die einen dem Bodenumriß angepaßten Formstempel und eine zugeordnete, die Hülse umschließende Matrize aufweist.

Aus bereits erläuterten Gründen weist bei einer bevorzugten Ausführungsform die Schweißvorrichtung eine in ihrer Querschnittsgestalt dem Umriß des Bodens angepaßte stempelförmige Sonotrode auf, die an dem umgebogenen Teil des Hülsenüberstandes seitlich satt anliegend von der Stirnseite her in die Hülse einführbar ist und der wenigstens ein die Hülse im Bereiche des Bodens umgebender und diese zusammen mit der Randleiste des Bodens und dem umgeschlagenen Teil des Hülsenüberstan-

- 8 -     0167645

des radial gegen die Sonotrode preßender Klemmbacken zugeordnet ist. Dieser Klemmbacken kann mit
Vorteil mehrteilig sein, wobei seine Backenteile
dann mit einer Klemmvorrichtung verbunden sind.

Da der mehrteilige Klemmbacken auf der Hülsenaußenseite angreift, ist mit verhältnismäßig einfachen Mitteln sichergestellt, daß die Hülse,
die Randleiste des Bodens und der umgefaltete Hülsenüberstand mit dem für die Erzielung einer dichten Schweißverbindung erforderlichen Druck großflächig gegen die innenliegende Sonotrode angepreßt werden. Die innenliegende Sonotrode ist in
Gestalt eines einstückigen Stempels ausgebildet,
der den Preßdruck aufnimmt; ihre klotzförmige Form
ist für die Schwingungserzeugung günstig.

Weiterbildungen der erläuterten Vorrichtung sind
Gegenstand von Unteransprüchen.

In der Zeichnung ist ein Ausführungsbeispiel des Gegenstandes der Erfindung schematisch dargestellt.
Es zeigen

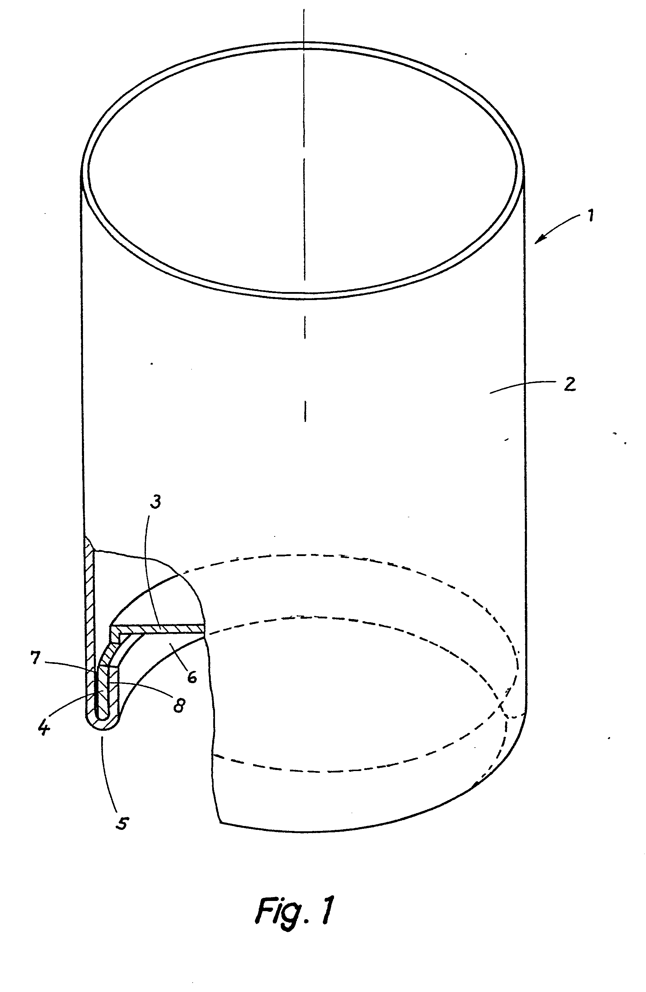

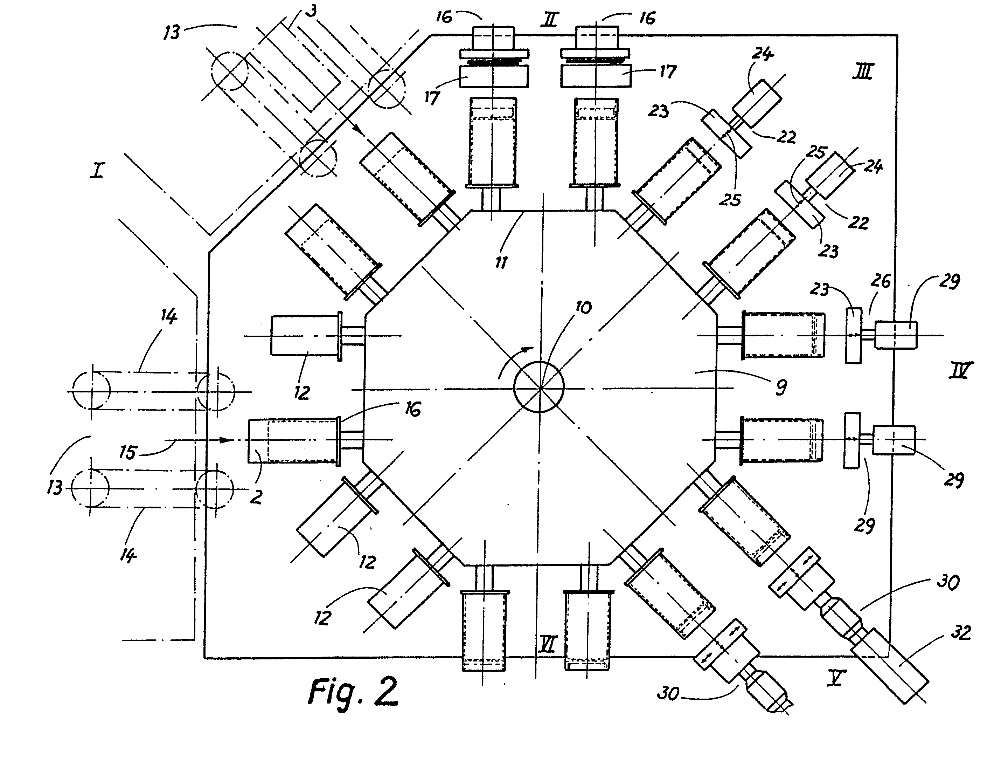

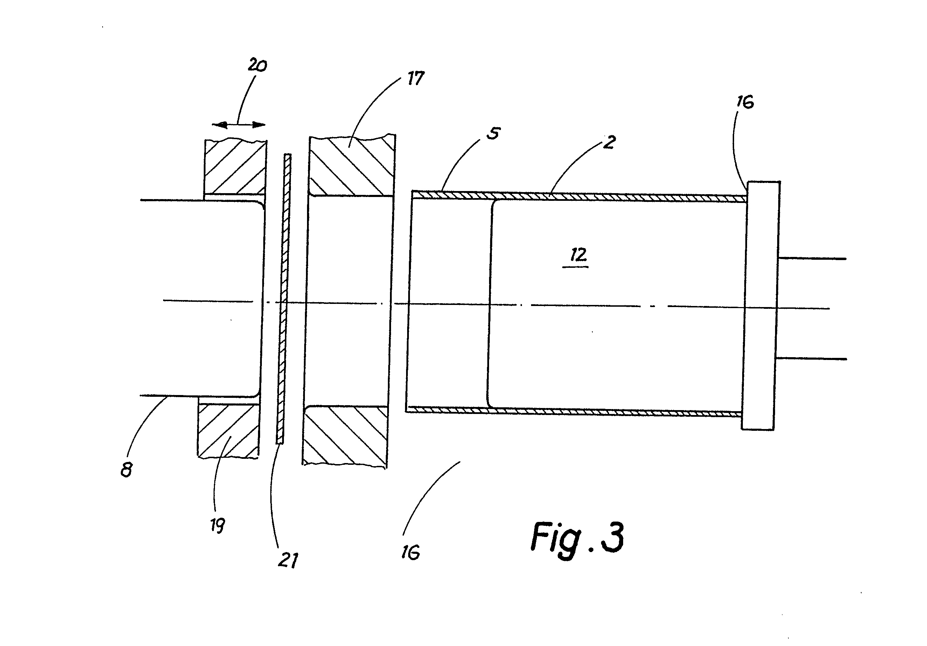

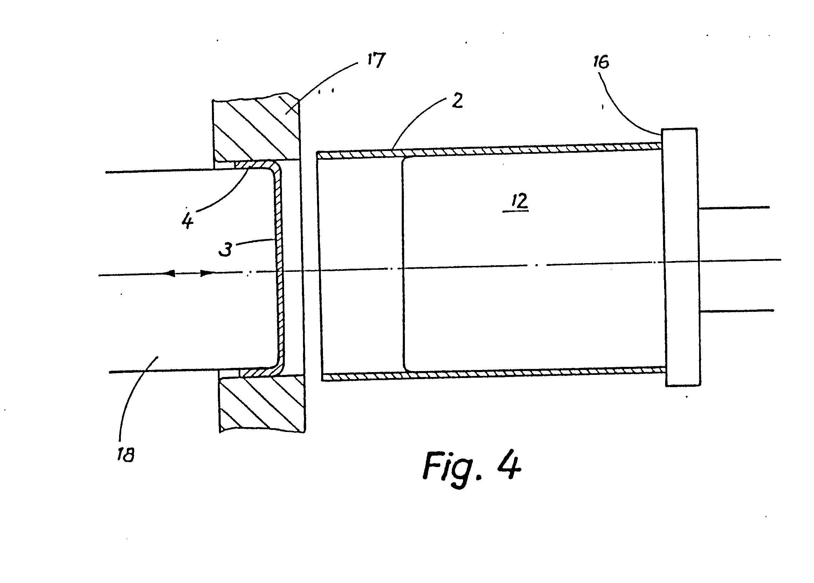

Figur 1 einen nach dem erfindungsgemäßen Verfahren hergestellten trommelförmigen Behälter in perspektivischer Darstellung, teilweise aufgeschnitten, Figur 2 eine Vorrichtung gemäß der Erfindung in einer Draufsicht, Figur 3
die Bodenfertigungs- und Einsetzvorrichtung der Vorrichtung nach Figur 2 im
axialen Schnitt, in einer vereinfachten
Teildarstellung, Figur 4 die Vorrichtung nach Figur 3 unter Veranschaulichung des Vorganges des Einsetzens des

- 9 -    0167645

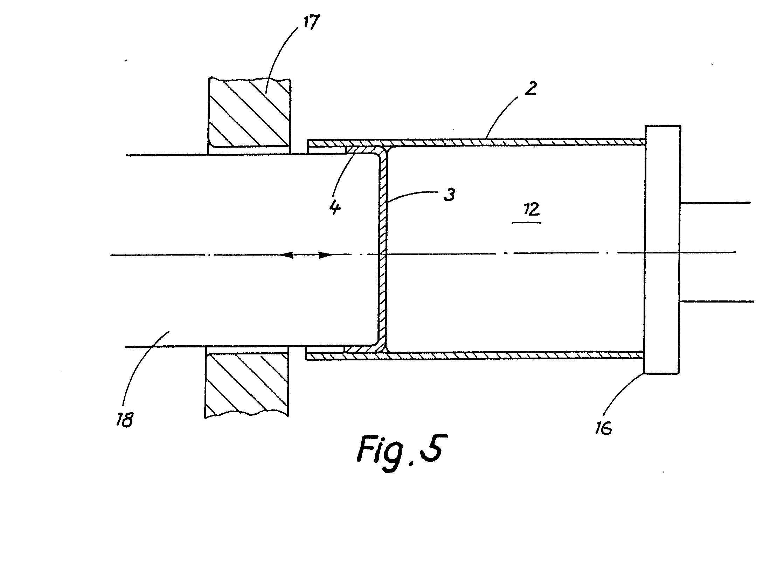

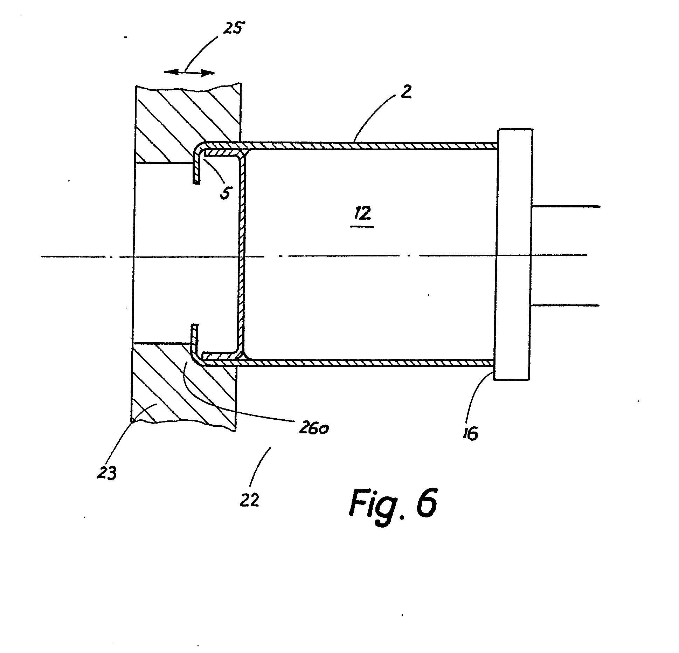

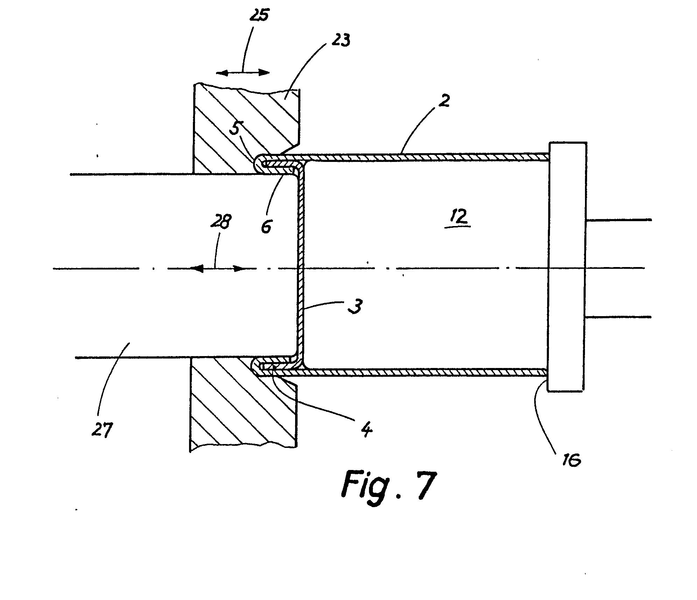

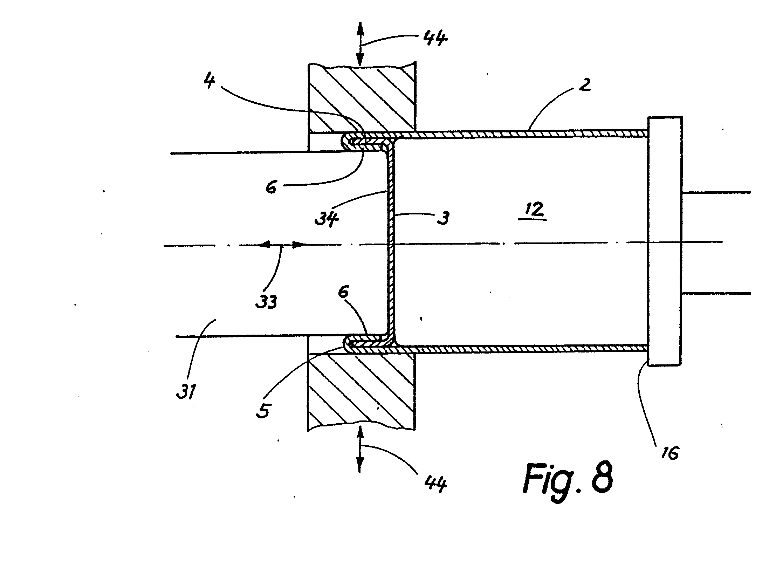

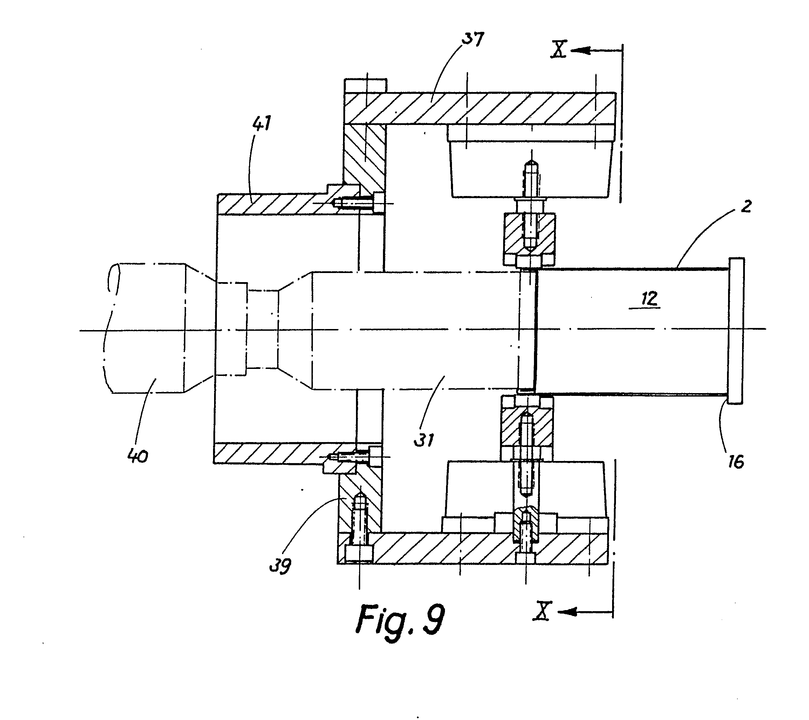

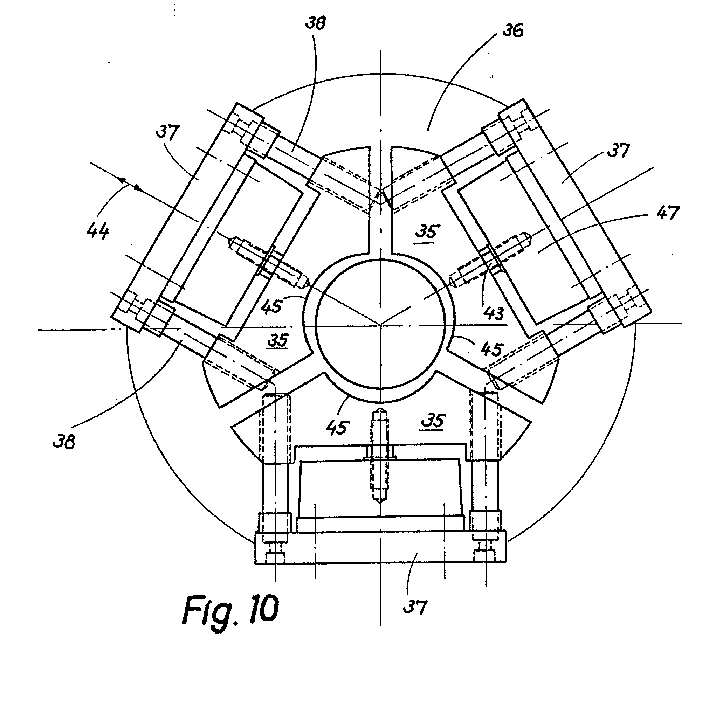

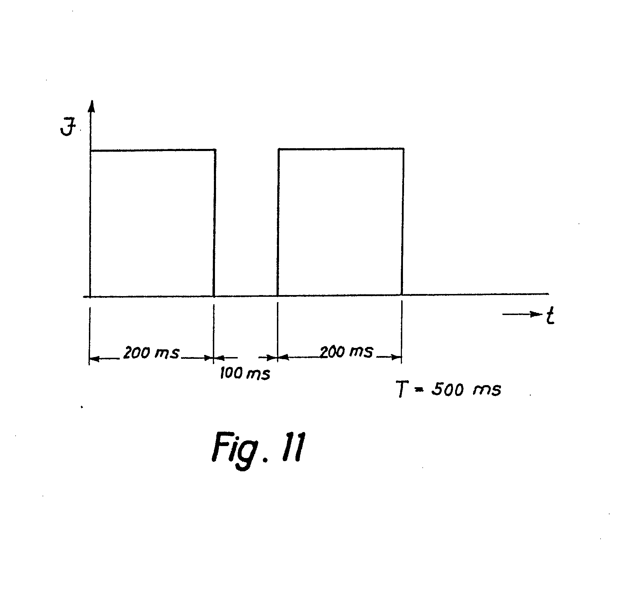

Bodens in die Hülse, in einer entsprechenden Darstellung, Figur 5 die Vorrichtung nach Figur 3 unter Veranschaulichung des Zustandes beim Abschluß des Einsetzens des Bodens in einer entsprechenden Darstellung, Figur 6 die Vorbördelvorrichtung der Vorrichtung nach Figur 2 in einer vereinfachten Teildarstellung im axialen Schnitt und in einer Seitenansicht, Figur 7 die Umbördelvorrichtung der Vorrichtung nach Figur 2 in einer vereinfachten Teildarstellung, im axialen Schnitt in einer Seitenansicht, Figur 8 die Ultraschall-Verschweißvorrichtung nach Figur 2 in einer vereinfachten Teildarstellung, im axialen Schnitt in einer Seitenansicht, Figur 9 die Ultraschall-Schweißvorrichtung nach Figur 8 unter Veranschaulichung weiterer Einzelheiten, im axialen Schnitt in einer Seitenansicht, Figur 10 die Vorrichtung nach Figur 9 in einer Ansicht längs der Linie X-X der Figur 9 und Figur 11 ein Diagramm zur Veranschaulichung der zeitlichen Aufeinanderfolge der Ultraschallschweißimpulse bei der Vorrichtung nach Figur 9, 10.

Der in Figur 1 dargestellte einseitig offene trommelförmige Behälter 1 weist eine im wesentlichen zylindrische Querschnittsgestalt auf. Er ist aus einem auf der Behälterinnenseite mit einem thermoplastischen Kunststoff beschichteten Pappematerial hergestellt und besteht aus einer vorgefertigten Hülse 2 und einem endseitig in diese eingesetzten Boden 3. Der ebenfalls aus einem auf der im Behälterinneren liegenden Seite mit einem thermoplastischen Kunststoff beschichteten Pappematerial bestehende Boden 3 weist randseitig eine rings umlaufende abgewinkelte Randleiste 4 auf, die bei eingesetztem Boden unten zu der Aufstellfläche des Behälters 1 hin weist.

Der Boden 3 ist so tief in die Hülse 2 eingesetzt, daß ein Überstand 5 der Hülse 2 verbleibt, der in der aus Figur 1 ersichtlichen Weise flachliegend U-förmig umgeschlagen und mit einem Teil 6 großflächig gegen die Innenseite der Randleiste 4 des Bodens 3 angelegt ist. Die Randleiste 4 ist doppelseitig abdichtend eingeschweißt. Sie ist nämlich bei 7 auf ihrer Außenumfangsfläche mit der Innenfläche der Hülse 2 und bei 8 auf ihrer Innenumfangsfläche mit dem umgeschlagenen Teil 6 des Hülsenüberstandes 5 jeweils abdichtend verschweißt. Als Schweißmaterial dient dabei die an den jeweiligen Schweißflächen vorhandene Kunststoffschicht, die durch die thermoplastische Kunststoffbeschichtung des Pappematerials gebildet ist.

Das selbsttätige Einsetzen des Bodens 3 in die vorgefertigte Hülse 2 sowie die Fixierung des Bodens 3 in der Hülse 2 und dessen abgedichtete Verschweißung erfolgen mit der in den Figuren 2 bis 10 dargestellten Vorrichtung:

Die Vorrichtung weist ein in Gestalt eines regelmäßigen Achteckes ausgebildetes Schaltrad 9 auf, das um eine Vertikalachse 10 drehbar gelagert und mit einem nicht weiter dargestellten Schrittschaltantrieb gekuppelt ist. Im Bereiche seiner ebenen Umfangsflächen 11 trägt das Schaltrad 9 jeweils paarweise einander zugeordnete Hülsenaufnahmen 12, von denen jede im wesentlichen in Gestalt eines Dornes ausgebildet ist, dessen Umriß dem Innenumriß einer Hülse 2 entspricht. Wie aus Figur 2 zu ersehen, sind die Hülsenaufnahmen 12 jeweils paarweise parallel zueinander angeordnet.

Rings um den Umfang des den Träger für die Hülsenaufnahmen 12 bildenden Schaltrades 9 sind Arbeitsstationen I bis VI angeordnet, in denen die einzelnen Bearbeitungsvorgänge ausführende Vorrichtungen vorgesehen sind. Der Schrittschaltantrieb des Schaltrades 9 ist derart ausgelegt, daß bei einer Schrittschaltbewegung ein Paar einander zugeordneter und zueinander paralleler Hülsenaufnahmen 12 von einer Arbeitsstation in die nächstfolgende transportiert wird.

Die auf zwei Teilstationen aufgeteilte Arbeitsstation I dient zum Aufstecken der vorgefertigten Hülsen 2 auf die Hülsenaufnahmen 12. In jeder ihrer Teilstationen ist eine Hülsenformeinrichtung angeordnet, die schematisch bei 13 angedeutet ist und deren Einzelheiten beispielsweise aus der DE-PS 27 05 596 entnommen werden können. Die Hülsenformeinrichtung 13 weist zwei parallel zueinander angeordnete endlose Förderbänder 14 auf, zwischen denen eine vorgefertigte Hülse 3 in Richtung eines Pfeiles 15 herantransportiert und auf eine gegenüberliegende Hülsenaufnahme 12 aufgesteckt wird. Jede Hülsenaufnahme 12 weist eine untere Anschlagschulter 16 auf, gegen die die Hülse 2 zur Anlage gebracht wird, womit der genau lagerichtige Sitz der Hülse 2 auf der Aufnahme 12 gewährleistet ist.

Da das Aufstecken der Hülsen 2 auf die Hülsenaufnahmen 12, verglichen mit den anderen Arbeitsgängen, eine längere Zeit in Anspruch nimmt, werden in der Arbeitsstation I gleichzeitig zwei Hülsen 2 aufgesteckt, wie dies aus Figur 2 zu ersehen ist.

In der Arbeitsstation II erfolgt das Einsetzen des Bodens 3 in die jeweilige Hülse 2. Die in dieser Arbeitsstation vorgesehenen beiden Bodenform- und Einsetzvorrichtungen 16 sind in ihrem grundsätzlichen Aufbau aus den Figuren 3 bis 5 zu ersehen:

Jede der Bodenform- und Einsetzvorrichtungen 16 weist eine ringförmige Bodenzieh-Matrize 17 auf, die koaxial zu der zugeordneten Hülsenaufnahme 12 ausgerichtet ist und der ein ebenfalls koaxialer Boden-Formstempel 18 zugeordnet ist, der, bezogen auf Figur 3, nach rechts auf die Hülsenaufnahme 12 vorbewegbar ist. Dem Boden-Formstempel 18 ist ein ihn umgebender ringförmiger Niederhalter 19 zugeordnet, der zunächst in der in Figur 3 veranschaulichten Stellung steht.

Zwischen die Bodenzieh-Matrize 17 und den Niederhalter 19 wird eine kreisförmig ausgestanzte Kartonscheibe 21 eingelegt, die über den gemäß einem Doppelpfeil 20 nach rechts bewegten Niederhalter auf der Bodenzieh-Matrize 17 reibschlüssig fixiert wird.

Der sodann, bezogen auf Figur 3 nach rechts vorbewegte Boden-Formstempel 18 formt die ebene Kartonscheibe 21 in der aus Figur 4 ersichtlichen Weise
in den im wesentlichen topfförmigen Boden 3 um,
wobei die rings umlaufende abgewinkelte Randleiste 4 ausgebildet wird.

Im weiteren Verlauf der nach rechts gerichteten Vorbewegung des Boden-Formstempels 18 wird der so geformte Boden 3 schließlich in der aus Figur 5 ersichtlichen Weise mit seiner Randleiste 4 nach außen weisend in die Hülse 2 eingeschoben, wobei er
satt gegen die Stirnfläche der Hülsenaufnahme 12
angepreßt wird.

Anschließend wird der Boden-Formstempel 18 wieder,
bezogen auf Figur 5, nach links aus der Hülse 2
herausgezogen, so daß diese von dem Schaltrad 9
in die nächste Arbeitsstation III transportiert
werden kann.

Die Arbeitsstation III weist zwei parallel zueinander angeordnete Vorbördelvorrichtungen 22 auf, deren Funktion insbesondere aus Figur 6 zu ersehen
ist:

Jede der Vorbördelvorrichtungen 22 verfügt über
ein in Gestalt einer sogenannten Bördelglocke 23
ausgebildetes Formwerkzeug, das koaxial zu der
jeweiligen Hülsenaufnahme 12 angeordnet und durch
eine Hubvorrichtung 24 (Figur 2) gemäß einem Doppelpfeil 25 auf die zugeordnete Hülsenaufnahme 12
zu und von dieser weg bewegbar ist.

Die Bördelglocke 23 weist eine rings umlaufende Formfläche 260 auf, die derart gestaltet ist, daß beim
Aufsetzen der Vorbördelglocke 23 auf die auf der Hülsenaufnahme 12 sitzende Hülse 2 der Hülsenüberstand 5 in der aus der Figur 6 zu entnehmenden Weise rechtwinklig zu der Hülsenlängsachse nach innen umgefaltet wird.

Zur Erleichterung des Formvorganges kann die Vorbördelglocke 23 auch beheizt sein.

Nach dem Abschluß dieses Vorbördelvorganges werden die die vorgebördelten Hülsen 2 tragenden Hülsenaufnahmen 12 in die nachfolgende Arbeitsstation IV weitertransportiert.

In der Arbeitsstation IV sind zwei Umbördelvorrichtungen 26 vorhanden, die parallel zueinander angeordnet sind und deren Einzelheiten aus den Figuren 2 und 7 zu entnehmen sind:

Jede der Umbördelvorrichtungen 26 verfügt wieder über eine Vorbördelglocke 23, die auf die zugeordnete Hülsenaufnahme 12 zu-und von dieser wegbewegbar ist (Doppelpfeil 25) und der ein zu der ...... aufnahme 12 koaxialer Bördelstempel 27 zugeordnet ist, der in der durch einen Doppelpfeil 28 angedeuteten Weise hin- und herbewegbar ist. Seine zugeordnete Hubvorrichtung ist bei 29 in Figur 2 angedeutet.

Ausgehend von dem vorgebördelten Zustand der Hülse 2 nach Figur 6 schlägt der Bördelstempel 27 den Hülsenüberstand 5 U-förmig nach innen, so daß sich der in Figur 7 veranschaulichte Endzustand ergibt.

Nach dem Zurückziehen des Bördelstempels 27 und der Vorbördelglocke 23 schaltet das Schaltrad 9
die Hülsenaufnahmen 12 mit den darauf befindlichen
Hülsen 2 in die nächstfolgende Arbeitsstation V.

In der Arbeitsstation V wird der Boden 3 mit der
Hülse 2 verschweißt. Die Arbeitsstation verfügt
über zwei parallel zueinander angeordnete Ultraschall-Schweißvorrichtungen 30, die in ihren Einzelheiten in den Figuren 8 bis 11 veranschaulicht
sind:

Jede der Ultraschall-Schweißvorrichtungen 30 weist
eine mit einem Ultraschallerzeuger gekoppelte, einstückige stempel- oder klotzförmige Sonotrode 31 auf,
die in ihrer Umrißgestalt der Umrißgestalt des Bodens 3 auf dessen Innenseite angepaßt ist. Die
Sonotrode 31 ist mit einer Hubvorrichtung 32 gekuppelt, die ihr eine auf die zugeordnete Hülsenaufnahme 12 zu und von dieser weg gerichtete hin-
und hergehende Hubbewegung erteilen kann, welche
durch einen Doppelpfeil 33 in Figur 8 angedeutet
ist. Die koaxial zu der Hülsenaufnahme 12 angeordnete Sonotrode 31 ist mit einer ebenen Stirnfläche 34 ausgebildet und im übrigen derart gestaltet, daß in der in Figur 8 veranschaulichten
in das offene Ende der Hülse 2 eingeschobenen Stellung sie ringsum satt an dem U-förmig umgeschlagenen Teil 6 des Hülsenüberstandes 5 anliegt, während ihre Stirnfläche 34 den Boden 3 gegen die
Stirnfläche der Hülsenaufnahme 12 anpreßt.

Die Sonotrode 31 im Bereiche ihres vorderen Endes umgebend ist ein aus drei (oder mehreren Klemmsegmenten
35 bestehender ringförmiger Klemmbacken 36 vorgesehen,
dessen Teile 35 jeweils an einer Halterungsplatte 37 über zwei parallele Führungsstangen 38 längsverschieblich gelagert sind. Die drei Halterungsplatten 37 sind einenends in der aus Figur 9 ersichtlichen Weise mit einer Ringplatte 39 verschraubt, die ihrerseits über eine die Sonotrode 31 und einen mit dieser gekuppelten Booster 40 umgebende Halterungsbuchse 41 mittels eines nicht weiter dargestellten Halters gestellfest fixiert ist.

Zwischen der Halterungsplatte 37 und dem zugeordneten Klemmbackenteil 35 ist ein pneumatischer Kurzhub-Zylinder 42 angeordnet, der über eine Kolbenstange 43 mit dem Klemmbackenteil 35 gekuppelt ist und diesem eine parallel zu den Führungsstangen 38 gerichtete hin- und hergehende Hubbewegung erteilen kann, wie sie durch den Doppelpfeil 44 in Figur 10 angedeutet ist.

In die in die Arbeitsstation V überführten, jeweils einen eingesetzten Boden 3 enthaltenden und im Bereiche des Hülsenüberstandes 5 U-förmig umgefalteten Hülsen 2 wird in der aus Figur 8 ersichtlichen Weise jeweils die stempelförmige Sonotrode 31 stirnseitig bis zur Anlage mit ihrer Stirnfläche 34 an dem Boden 3 eingeführt. Sodann werden die Klemmbackenteile 35, ausgehend von der in Figur 10 dargestellten geöffneten Stellung, von ihren Kurzhub-Zylindern 42 radial vorbewegt, so daß sie mit ihrer kreisförmigen Klemmm- oder Preßfläche 45 einander ergänzend die Außenwand der Hülse 2 radial nach innen zusammenpressen. Dabei werden die Wandung der Hülse 2 auf der einen Seite und das U-förmig umgeschlagene Teil 6 des Hülsenüberstandes 5 auf der anderen Seite großflächig satt in radialer Richtung mit der dazwischenliegenden Randleiste 4 des Bodens 3 verpreßt.

Sowie dieser Preßzustand erreicht ist, in dem
alle miteinander zu verbindenden Flächen aufeinandergedrückt sind, wird der mit der Sonotode 31 gekuppelte Ultraschallwellengenerator angesteuert, der einen ersten Schweißimpuls abgibt, wie dies aus dem Diagramm nach Figur 11 zu
entnehmen ist. Dieser Schweißimpuls bewirkt, daß
der die Beschichtung des Pappematerials bildende
thermoplastische Kunststoff auf der Hülseninnenseite entweder auf der Innen- oder auf der Außenseite der Randleiste 4 des Bodens 3 auf die
Schweißtemperatur erwärmt und plastifiziert wird.
Damit kommt die Verschweißung an dieser Stelle
rings um den Umfang der Hülse 2 zustande. Nach
der Beendigung des ersten Schweißimpulses härtet
der an der Schweißstelle erwärmte Kunststoff sofort aus, womit die einander zugeordneten Flächen
durch die Schweißstelle starr miteinander verbunden sind.

Nach Ablauf einer kurzen Zeitspanne (Figur 11)
gibt der Ultraschallwellengenerator einen zweiten Schweißimpuls ab. Da die durch den ersten
Schweißimpuls miteinander verschweißten Flächen
nicht mehr gegeneinander beweglich sind, kommt der
zweite Schweißimpuls nunmehr selbsttätig auf der
noch unverbundenen Flächenpaarung im Bereiche der
Randleiste 4 voll zur Wirkung. Nach Beendigung
des zweiten Schweißimpulses ist deshalb die Randleiste 4 des Bodens 3 sowohl auf ihrer Außenumfangsseite als auch auf ihrer Innenumfangsseite

mittels des jeweils dazwischenliegenden Beschichtungs-Kunststoffes dicht mit der Hülseninnenwand
bzw. dem Teil 6 des Hülsenüberstandes verbunden.

Nunmehr wird der Klemmbacken 36 wieder in die in
Figur 10 dargestellte gelöste Stellung überführt,
während die Sonotrode 31 aus der Hülse 2 zurückgezogen wird.

Das Schaltrad 9 bringt die beiden so fertiggestellten Behälter nunmehr in die Arbeitsstation VI, in
der die Behälter durch zwei in Figur 2 nicht weiter
dargestellte Abzieh- oder Auswerfvorrichtungen
von den Hülsenaufnahmen 12 abgezogen und ihrer
weiteren Verwendung zugeführt werden.

Die Vorrichtung und das Verfahren wurden im Vorstehenden anhand eines zylindrischen Behälters geschildert; in gleicher Weise können auch Behälter
mit rechteckiger, ovaler, quadratischer oder anderer Querschnittsgestalt hergestellt werden. Auch
können auf diese Weise ganz durchgehend aus entsprechendem Kunststoff bestehende Böden 3 in die
Hülsen 2 eingeschweißt werden, wie es auch weiterhin möglich ist, die Behälter insgesamt, d.h.
Hülse 2 und Boden 3, so aus einem thermoplastischen Kunststoff zu erzeugen.

Außerdem können die Hülsenaufnahmen 12 ebenso wie
die Umbördelvorrichtung 26 etc. jeweils zu mehreren
einander zugeordnet sein.

- 19 -

0167645

Patentansprüche:

1. Verfahren zum Herstellen von dichten trommel-
oder dosenförmigen Behältern, insbesondere aus
zumindest einseitig mit thermoplastischem
Kunststoff beschichtetem Karton- oder Pappematerial, bei dem in eine vorgefertigte Behälterhülse ein unter Ausbildung einer umlaufenden Randleiste randseitig abgewinkelter
Boden mit der Randleiste nach unten weisend eingesetzt und mit der Hülse über die dazwischenliegende Kunststoffschicht verschweißt
wird, wobei ein Überstand der Hülse nach innen
umgebogen wird, dadurch gekennzeichnet, daß
nach dem Einsetzen des Bodens der Überstand
der Hülse flachliegend U-förmig umgeschlagen
und großflächig gegen die Innenseite der Randleiste des Bodens angepreßt wird, und daß sodann die Randleiste zusätzlich mit dem an ihr
innen anliegenden Teil des Hülsenüberstandes
abdichtend verschweißt wird.

2. Verfahren nach Anspruch 1, dadurch gekennzeichnet, daß bei Ultraschallverschweißung der
Randleiste mit dem Boden die doppelseitige
Verschweißung der Randleiste durch zwei in zeitlichem Abstand erfolgende Ultraschallimpulse erfolgt, deren zeitlicher Abstand so groß ist, daß
der thermoplastische Kunststoff an der von dem
ersten Impuls herrührenden Schweißstelle erhärtet ist, bevor der zweite Schweißimpuls auftritt.

3. Verfahren nach Anspruch 2, dadurch gekennzeichnet, daß eine die Schweißimpulse erzeugende, dem Bodenumriß angepaßte Sonotrode innerhalb des umgeschlagenen Hülsenüberstandes angeordnet und die Hülse von außen her gegen die Sonotrode angepreßt wird.

4. Vorrichtung zur Durchführung des Verfahrens nach einem der vorhergehenden Ansprüche, mit einer eine vorgefertigte Behälterhülse halternden Hülsenaufnahme und einer den unter Ausbildung einer umlaufenden Randleiste randseitig abgewinkelten Boden in die Hülse einschiebenden Bodeneinsetzvorrichtung, einer einen Hülsenüberstand gegen die nach außen weisende Randleiste des Bodens zu umbördelnden Bördelvorrichtung und einer Ultraschall-Schweißvorrichtung zur dichten Verschweißung der Hülseninnenwand mit der Randleiste des eingesetzten Bodens mittels der dazwischenliegenden Schicht aus thermoplastischem Kunststoff, dadurch gekennzeichnet, daß die Bördelvorrichtung (22, 26) eine den Hülsenüberstand (5) flachliegend U-förmig umfaltende Einrichtung (23, 27) aufweist, durch die der umgeschlagene Teil (6) des Hülsenüberstandes (5) großflächig gegen die Innenseite der Randleiste (4) des eingesetzten Bodens (3) anpreßbar ist, und daß die Schweißvorrichtung (30) zur doppelseitigen Verschweißung der Randleiste (4) mit der Hülseninnenwand und dem umgeschlagenen Teil (6) des Hülsenüberstandes (5) eingerichtet ist.

5. Vorrichtung nach Anspruch 4, dadurch gekennzeichnet, daß die Bördelvorrichtung eine den Hülsenüberstand (5) in einem ersten Schritt in eine etwa rechtwinklig zu der Hülsenlängsachse verlaufende Richtung abwinkelnde Vorbördelvorrichtung (22) und eine anschließend daran zur Wirkung kommende Umbördelvorrichtung (26) enthält, durch die der abgewinkelte Teil des Hülsenüberstandes (5) in einem zweiten Schritt in seinen Endzustand fertigfaltbar ist und die einen dem Bodenumriß angepaßten Formstempel (27) und eine zugeordnete, die Hülse umschließende Matrize (23) aufweist.

6. Vorrichtung nach einem der Ansprüche 4 oder 5, dadurch gekennzeichnet, daß die Schweißvorrichtung (30) eine in ihrer Querschnittsgestalt dem Umriß des Bodens (3) angepaßte stempelförmige Sonotrode (31) aufweist, die an dem umgebogenen Teil (6) des Hülsenüberstandes (5) seitlich satt anliegend von der Stirnseite her in die Hülse (2) einführbar ist und der wenigstens ein die Hülse (2) im Bereiche des Bodens (3) umgebender und diese zusammen mit der Randleiste (4) des Bodens (3) und dem umgeschlagenen Teil (6) des Hülsenüberstandes (5), radial gegen die Sonotrode (31) pressender Klemmbacken (36) zugeordnet ist.

7. Vorrichtung nach Anspruch 6, dadurch gekennzeichnet, daß der Klemmbacken (36) mehrteilig ist und seine Backenteile (35) mit einer Klemmvorrichtung (42) verbunden sind.

8. Vorrichtung nach einem der Ansprüche 4 bis 7, dadurch gekennzeichnet, daß die Schweißvorrichtung (30) bei jedem Schweißvorgang zwei in einem kurzen zusätzlichen Abstand voneinander auftretende Schweißimpulse abgibt, von denen der zweite Schweißimpuls erst dann auftritt, wenn das von dem ersten Schweißimpuls an der entsprechenden Schweißstelle (7, 8) erweichte thermoplastische Material erhärtet ist.

9. Vorrichtung nach einem der Ansprüche 5 und 6, dadurch gekennzeichnet, daß sie einen an seinem Umfang eine Anzahl dornförmiger Hülsenaufnahmen (12) tragenden, mit einem Schrittschaltantrieb gekuppelten Träger (9) aufweist, dem über seinen Umfang im Schrittabstand verteilt aufeinanderfolgend angeordnet, wenigstens eine Aufsteckvorrichtung (14) für die vorgefertigten leeren Hülsen (2), wenigstens eine Bodeneinsetzvorrichtung (16), wenigstens eine Vorbördelvorrichtung (22), wenigstens eine Umbördelvorrichtung (26) und wenigstens eine Schweißvorrichtung (30) zugeordnet sind.

Fig. 1

0167645

Fig. 2

0167645

Fig. 3

*Fig. 4*

17

16

2

4

3

12

18

0167645

Fig.5

Fig. 6

Fig. 7

Fig. 8

Fig. 9

0167645

Fig. 10

38    36    37    37    47    44    35    35    45    43    45    38    35    45    37

0167645

Fig. 11

200 ms

100 ms

200 ms

$T = 500$ ms

0167645

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 187 768 (SUZUKI) <br> * Spalte 7, Zeile 57 - Spalte 8, Zeile 27; Figuren 1-2 * <br><br> --- | 1,4 | B 31 B 17/00 |
| A | PLASTVERARBEITER, Band 32, Nr. 12, Dezember 1981, Seite 1582, Speyer/Rhein, DE; "Ultraschallkompaktschweissgeräte" <br><br> --- | 2,8 | |
| A | DE-A-2 831 240 (RISSEN) <br> * Das ganze Dokument * <br><br> --- | 3,6 | |
| A | US-A-2 216 331 (SWALLOW) <br> * Das ganze Dokument * <br><br> --- | 5,9 | |
| A | US-A-2 608 914 (MERKLE) <br><br> --- | | RECHERCHIERTE SACHGEBIETE (Int. Cl.4) <br><br> B 31 B <br> B 29 C |
| A | DE-B-1 679 902 (AVI) <br><br> --- | | |
| A | US-A-3 438 824 (BALAMUTH) <br><br> --- | | |
| A | FR-A-1 217 145 (SOCIETE INDUSTRIELLE DE LIGUGE) <br><br> --- | | |
| A | US-A-2 125 848 (MILLER) <br><br> ----- | | |

Der vorliegende Recherchenbericht wurde für alle Patentansprüche erstellt.

| Recherchenort | Abschlußdatum der Recherche | Prüfer |
|---|---|---|
| DEN HAAG | 15-03-1985 | PEETERS S. |